# EUROPÄISCHE PATENTSCHRIFT

(11) **EP 3 233 583 B1**
(45) Veröffentlichungstag und Bekanntmachung des Hinweises auf die Patenterteilung: **18.09.2019**
(21) Anmeldenummer: 15813727.3
(22) Anmeldetag: 08.12.2015
(51) Int. Cl.: B60R 21/34, B60R 19/18, B60R 19/28, B64C 1/06, F16F 7/12

(54) **DEFORMATIONSSTRUKTUR, INSBESONDERE ZUM FUSSGÄNGERSCHUTZ FÜR EIN KRAFTFAHRZEUG**
PEDESTRIAN PROTECTION DEVICE FOR A MOTOR VEHICLE
DISPOSITIF DE PROTECTION DE PIÉTON POUR VÉHICULE AUTOMOBILE

(30) Priorität: 18.12.2014 DE 102014226363; 24.04.2015 DE 102015207610
(43) Veröffentlichungstag der Anmeldung: 25.10.2017
(73) Patentinhaber: Bayerische Motoren Werke Aktiengesellschaft, 80809 München (DE)
(72) Erfinder: AKIF, Öztzan, 80937 München (DE); FICHTINGER, Gerhard, 85630 Grasbrunn (DE); RIEDL, Wilhelm, 85276 Pfaffenhofen (DE)
(86) Internationale Anmeldenummer: PCT/EP2015/078930
(87) Internationale Veröffentlichungsnummer: WO 2016/096528

(56) Entgegenhaltungen:
- EP-A2- 2 266 846
- WO-A1-02/18816
- DE-U1- 29 700 017
- US-A- 4 844 213

## Beschreibung

Die vorliegende Erfindung bezieht sich auf eine Deformationsstruktur, insbesondere zum Fußgängerschutz für ein Kraftfahrzeug, die beispielsweise zur Anordnung zwischen einer Stoßfängerverkleidung und einem Stoßfängerquerträger angepasst ist.

Ein bekannter Vorderwagen eines Kraftfahrzeugs hat beispielsweise einen Stoßfängerquerträger, der an vorderen Enden von Längsträgern befestigt ist, und eine Stoßfängerverkleidung, wobei zwischen der Stoßfängerverkleidung und dem Stoßfängerquerträger zum Schutz von Fußgängern ein weicher, auf einem vergleichsweise niedrigen Lastniveau verformbarer Schaum angeordnet ist. Der weiche Schaum ist aufgrund eines Fußgängerschutzes angeordnet, um einen Fußgänger gegebenenfalls vor einer direkten unmittelbaren Kollision mit einer harten, steifen Struktur des Kraftfahrzeugs, wie beispielsweise dem Stoßfängerquerträger, zu schützen.

Des Weiteren gibt es ein Erfordernis, dass in einem sehr niedrigen Geschwindigkeitsbereich von bis zu beispielsweise 4 km/h, in dem der Fußgängerschutz aufgrund der geringen Geschwindigkeit nicht relevant ist, das Kraftfahrzeug bei einer Kollision schadensfrei bleibt.

Darüber hinaus gibt es bei einer etwas höheren Geschwindigkeit, die ebenfalls noch nicht für den Fußgängerschutz relevant ist, das Erfordernis, dass ein Schaden bei der Kollision möglichst klein ist und beispielsweise eine Kühlerstruktur, die sich in dem Vorderwagenbereich befindet, nicht beschädigt wird.

Die verschiedenen Anforderungen stehen zum Teil im Gegensatz zueinander und erfordern am Fahrzeugbug einen vergleichsweise langen Fahrzeugüberhang und damit ein höheres Gewicht und eine nachteilige Beeinflussung der Fahrdynamik.

Zum Lösen der daraus entstehenden Zielkonflikte wurde beispielsweise in der DE 102010054641 A1 eine Stoßfängeranordnung mit einem Querträger vorgeschlagen, der über Crashboxen an der Fahrzeugkarosserie befestigt ist. In Fahrtrichtung vor dem Querträger ist ein Fußgängerschutzelement für einen weichen Anprall eines Fußgängers ausgebildet. Zusätzlich ist ein schwenkbares

Energieabsorptionselement vorgesehen, das vor das Fußgängerschutzelement verschwenkbar ist und hierdurch eine erhöhte Energieabsorption bei Kollisionen ermöglicht, bei denen eine höhere Kollisionsenergieabsorptionsfähigkeit der Crashstruktur des Kraftfahrzeugs erforderlich ist.

Die DE 102012112636 A1 zeigt ebenfalls eine Stoßfängeranordnung mit einem Stoßfängerquerträger und einem Fußgängerschutzelement, das von einem steifen Zustand in einen vergleichsweise weichen Zustand, der einem Fußgängerschutz dient, mittels eines Aktuators umgeschaltet werden kann.

Den in der DE 102010054641 A1 und der DE 102012112636 A1 beschriebenen Stoßfängeranordnungen ist gemeinsam, dass hierfür eine Crash- bzw. Pre-Crash-Sensorik erforderlich ist, wobei auf Grundlage der Ausgangssignale der Sensorik zwischen einem harten, steifen Zustand der Crashstruktur mit hoher Kollisionsenergieabsorptionsfähigkeit und einem weichen Zustand der Crashstruktur mit zu Gunsten des Fußgängerschutzes geringer Kollisionsenergieabsorptionsfähigkeit umgeschaltet werden kann.

Die WO 02/18816 offenbart eine Deformationsstruktur nach dem Oberbegriff des Anspruchs 1.

Es ist daher die Aufgabe der vorliegenden Erfindung, eine Deformationsstruktur, insbesondere zum Fußgängerschutz für ein Kraftfahrzeug, die beispielsweise zur Anordnung zwischen einer Stoßfängerverkleidung und einem Stoßfängerquerträger angepasst ist, zu schaffen, die abhängig von einem Lastfall auf unterschiedlichen Energieniveaus verformbar ist, dabei einfach aufgebaut ist und unabhängig von einer Sensorik bzw. einem Aktuator funktioniert.

Diese Aufgabe wird durch eine Deformationsstruktur gelöst, die die Merkmale von Patentanspruch 1 aufweist. Vorteilhafte Ausgestaltungen der Erfindung sind in den abhängigen Patentansprüchen genannt.

Eine Deformationsstruktur, die auch Energieabsorptionsstruktur genannt werden kann, mit einer Reihe in eine Deformationsrichtung, d.h. der Richtung in die eine Last wirkt, hintereinander angeordneter Deformationselemente, wobei jeweils zwei aneinander angrenzende Deformationselemente mittels eines Kopplungsmechanismus derart miteinander gekoppelt sind, dass in einem ersten Lastfall, insbesondere einem ersten Kollisionslastfall, zwei angrenzende Deformationselemente miteinander in einen Rasteingriff gelangen oder sich einem Rasteingriff befinden, so dass eine Relatiwerschiebung der angrenzenden Deformationselemente zueinander in die Deformationsrichtung unterbunden oder zumindest erschwert ist und eine Verformung der Deformationsstruktur auf einem hohen Kraftniveau erfolgt, und in einem zweiten Lastfall, insbesondere einem zweiten Kollisionslastfall, zwei angrenzende Deformationselemente nicht in den Rasteingriff gelangen oder außer Rasteingriff gelangen, so dass eine Relativverschiebung der angrenzenden Deformationselemente in die Deformationsrichtung ermöglicht oder zumindest erleichtert ist und eine Verformung der Deformationsstruktur auf einem niedrigen Kraftniveau erfolgt.

Durch die erfindungsgemäße Deformationsstruktur sind keine Kollisionssensorik und keine Aktuatorik notwendig, um gegebenenfalls einen mechanischen Mechanismus aktiv zu verriegeln oder zu entriegeln und damit zwischen einer Struktur mit einem "weichen" Deformationsverhalten und einem "steifen" Deformationsverhalten bedarfsweise umschalten zu können. Somit kann die Deformationsstruktur mit einfachen Mitteln unter Ausnutzung eines Rasteingriffes des Kopplungsmechanismus, der abhängig von einem Lastfall verrastet oder nicht verrastet bzw. im verrasteten Zustand verbleibt oder aus diesem verrasteten Zustand gelangt, zwischen angrenzenden Deformationselementen vorstehende Aufgabe lösen. Der Kopplungsmechanismus nutzt dabei bei dem Rasteingriff eine Massenträgheit des Rasteingriffs, die bei unterschiedlichen Deformationsgeschwindigkeiten, also einer Geschwindigkeit einer Verschiebung zweier angrenzender Deformationselemente zueinander, zu einem Rasteingriff führt oder nicht.

Die Deformationsstruktur ist beispielsweise zum Fußgängerschutz für ein Kraftfahrzeug ausgebildet und anwendbar. Insbesondere kann die Deformationsstruktur zur Anordnung in einem Bereich zwischen einer Stoßfängerverkleidung, die eine Fahrzeugaußenhaut bildet, und einem Stoßfängerquerträger angepasst sein.

Die Deformationsrichtung ist insbesondere eine Kollisionsrichtung und ist bei der Anwendung zum Fußgängerschutz im Kraftfahrzeugbug oder Kraftfahrzeugheck eine Fahrzeuglängsrichtung. Eine Relatiwerschiebung zwischen angrenzenden Deformationselementen erfolgt dabei im Wesentlichen in Längsrichtung des Kraftfahrzeugs, welches üblicherweise auch eine Hauptrichtung bei einer Frontalkollision des Kraftfahrzeugs ist. Der Kopplungsmechanismus gemäß der vorliegenden Erfindung wirkt dabei unabhängig von einer Kollisionssensorik selbsttätig durch beispielsweise Ausnutzung der Massenträgheit des Rasteingriffs.

Grundsätzlich erstreckt sich der Schutzbereich der erfindungsgemäßen Deformationsstruktur jedoch auch auf alle anderen Anwendungsbereiche im Kraftfahrzeugbereich oder auch anderen Technologiefeldern, bei denen eine Verformbarkeit einer Deformationsstruktur auf unterschiedlichen Lastniveaus abhängig von einem Lastfall erforderlich ist.

Gemäß einer bevorzugten Weiterbildung der Deformationsstruktur weist jedes Deformationselement als Bestandteil des Kopplungsmechanismus ein elastisch verformbares Element auf, das mit dem angrenzenden Deformationselement eingreift und in dem ersten Lastfall sich in dem Rasteingriff mit dem angrenzenden Deformationselement befindet oder in den Rasteingriff mit dem angrenzenden Deformationselement gelangt, und in dem zweiten Lastfall nicht in den Rasteingriff mit dem angrenzenden Deformationselement gelangt oder außer Rasteingriff von dem angrenzenden Deformationselement gelangt.

Das Deformationselement kann auch mehr als ein elastisch verformbares Element, beispielsweise zwei, drei oder vier oder mehr aufweisen.

Bei der Deformationsstruktur mit dem elastischen Element kann der Kopplungsmechanismus bevorzugt derart ausgebildet sein, dass das elastisch verformbare Element durch eine Relativverschiebung zweier angrenzender Deformationselemente elastisch verformbar und damit vorspannbar ist.

Dies hat den Vorteil, dass eine Vorspannung des elastisch verformbaren Elements erst im Lastfall erfolgt und in einem normalen Zustand entspannt ist und hierdurch die Funktion der Deformationsstruktur über einen langen Zeitraum besser gewährleistet werden kann. Ein Verlust einer Vorspannkraft über den langen Zeitraum ist damit vermieden.

Alternativ kann das elastisch verformbare Element bereits im normalen Zustand ohne Lastfall vorgespannt sein.

Dies hat den Vorteil, dass zur Vorspannung keine Relativverschiebung zwischen den Deformationselementen erforderlich ist und die Deformationsstruktur gegebenenfalls kürzer ausgeführt werden kann.

Weiterhin kann der Kopplungsmechanismus insbesondere derart ausgebildet sein, dass unter Ausnutzung einer Massenträgheit des vorgespannten elastisch verformbaren Elements bei einer ersten, beispielsweise geringeren, Verschiebegeschwindigkeit das elastisch verformbare Element des einen Deformationselements mit einer Vertiefung des anderen Deformationselements in den Rasteingriff gelangt und das elastisch verformbare Element bei einer zweiten, beispielsweise höheren, Verschiebegeschwindigkeit nicht in den Rasteingriff mit der Vertiefung gelangt. Alternativ kann das elastisch verformbare Element auch mit einem Vorsprung des angrenzenden Deformationselements eingreifen. Hierdurch ist ein selbsttätiger Mechanismus geschaffen, der eine Massenträgheit des elastisch verformbaren Elements für seine Funktion nutzt. Demnach erfolgt bei einer niedrigen Verschiebegeschwindigkeit und damit einer niedrigen Kollisionsgeschwindigkeit ein Einrasten und das Deformationselement wirkt demnach steif. Bei der schnellen Verschiebegeschwindigkeit und damit der schnellen Kollisionsgeschwindigkeit rastet das elastisch verformbare Element nicht ein und eine weitere Verschiebung zwischen den angrenzenden Deformationselementen ist ermöglicht, wodurch die Deformationsstruktur insgesamt weich reagiert.

Der Rasteingriff kann also eine formschlüssige Verbindung zwischen den angrenzenden Deformationselementen herstellen, so dass eine Relativverschiebung zwischen den angrenzenden Deformationselementen nicht mehr möglich ist und sich die angrenzenden Deformationselemente hierdurch "steif" verhalten.

Gemäß einer bevorzugten Ausführungsform kann das elastisch verformbare Element eines Deformationselements derart zusammenwirkend mit einem angrenzenden Deformationselement ausgebildet ist, dass mit einer Verschiebung der angrenzenden Deformationselemente zueinander, das elastisch verformbare Element, beispielsweise über eine schräge Kontaktfläche des angrenzenden Deformationselements, elastisch verformbar und vorspannbar ist.

Hierdurch ist es ermöglicht, die Vorspannung des elastisch verformbaren Elements während des Lastfalls herzustellen. Mit anderen Worten wird beispielsweise eine Kollisionslast für eine Vorspannung des elastisch verformbaren Elements genutzt.

Das elastisch verformbare Element kann ein Schenkel sein, dessen vorderes, beispielsweise freies Ende eine Rastnase oder eine Rastvertiefung für einen Rasteingriff mit dem angrenzenden Deformationselement aufweist und dessen hinteres Ende ähnlich eines Kragarms fest eingespannt ist, so dass das vordere Ende mit der Rastnase eine Federwirkung aufweisen kann. Der Schenkel kann eine flächenförmiges Element, also blattförmig ausgebildet sein und kann demnach wie eine Blattfeder wirken. Bei der schnellen Verschiebung gleitet die Rastnase oder Rastvertiefung insbesondere über das Gegenstück des angrenzenden Deformationselements hinweg und eine weitere Verschiebung zwischen den angrenzenden Deformationselementen ist ermöglicht, wodurch die Deformationsstruktur insgesamt weich reagiert.

Die Deformationselemente können im Wesentlichen U-förmig mit einem Grundelement und zwei gegenüberliegenden Schenkeln, die jeder das elastische Element bilden, ausgebildet sein, wobei Enden mit beispielsweise einer Rastnase oder Rastvertiefung der Schenkel mit dem Grundelement eines weiteren Deformationselements gekoppelt sind.

Dabei können die beiden Schenkel insbesondere symmetrisch zueinander angeordnet sein. Die beiden Schenkel können ferner in entgegengesetzte Richtungen verformbar und vorspannbar sein.

Gemäß einer vorteilhaften Weiterbildung kann bei Deformationsstruktur gemäß der vorliegenden Erfindung jedes Deformationselement einstückig ausgebildet sein.

Hierdurch ist die Herstellung der Deformationselemente und der Deformationsstruktur vereinfacht und die Zahl der Bauteile gering.

Gemäß einer weiteren vorteilhaften Weiterbildung können die Deformationselemente aus einem Kunststoffmaterial ausgebildet sein.

Ein Kunststoffmaterial ist leicht, kostengünstig herstellbar und hiermit kann ein Kopplungsmechanismus mit Rasteingriff besonders einfach ausgebildet werden.

Gemäß einer weiteren Weiterbildung der Deformationsstruktur sind eine Vielzahl von Reihen von Deformationselementen nebeneinander angeordnet sind.

Der Ausdruck nebeneinander bedeutet insbesondere benachbart zueinander und umfasst auch die Anordnung übereinander.

Im Anwendungsfall zum Fußgängerschutz im Kraftfahrzeug bedeutet dies, dass die Reihen von Deformationselementen nebeneinander in y- und/oder z-Richtung angeordnet sein können. Insbesondere kann die Deformationsstruktur mit der Vielzahl von Reihen von Deformationselementen im Wesentlichen einen für einen Fußgängerschutz relevanten Zwischenraum zwischen der Stoßfängerverkleidung und dem Stoßfängerquerträger ausfüllen. Bei einer lokalen Beanspruchung der Deformationsstruktur kann hierbei eine entsprechende lokale Verformung der Deformationsstruktur erfolgen.

Eine Reihe Deformationselemente, insbesondere in der Anwendung für den Fußgängerschutz eines Kraftfahrzeugs, kann beispielsweise durch drei bis fünfzehn, beispielsweise zehn, hintereinander angeordneten Deformationselemente ausgebildet sein. Je nach Bauraum und Anwendungsfall können nebeneinander angeordnete Reihen eine unterschiedliche Zahl Deformationselemente aufweisen.

Gemäß einer Weiterbildung der Deformationsstruktur mit den mehreren benachbarten Reihen von Deformationselementen, können unmittelbar nebeneinander angeordnete Deformationselemente durch einen Steg miteinander verbunden sein.

Hierdurch kann die Deformationsstruktur eine integrale Baueinheit ausbilden, die einfach zu handhaben, beispielsweise zu montieren, ist. Ferner kann eine derartige Deformationsstruktur beispielsweise einfach durch sogenanntes Rapid Prototyping bzw. Rapid Manufacturing, beispielsweise Lasersintern oder Stereolithographie, als ein Bauteil hergestellt werden.

Der Steg kann insbesondere derart ausgebildet sein, dass er im Kollisionslastfall spröde und/oder plastisch versagt. Insbesondere versagt der Steg ohne eine Funktion der aneinander angrenzenden Deformationselemente zu beeinträchtigen.

Hierdurch wirkt der Steg sich nicht auf eine Funktion der Deformationsstruktur und insbesondere des Kopplungsmechanismus aus.

Gemäß einer bevorzugten Weiterbildung der Deformationsstruktur sind die Deformationselemente derart angepasst, in einem Zustand des Rasteingriffs, d.h. in dem ersten Lastfall, in dem die Deformationsstruktur steifer ist, Energie durch plastische Verformung und/oder sprödes Versagen der Deformationselemente über eine vorgegebene Deformationsstrecke zu absorbieren.

Bevorzugt ist eine Energieabsorptionsfähigkeit der Deformationselemente, die sich in einem Rasteingriff befinden bzw. im Rasteingriff bleiben, größer als eine Energieabsorptionsfähigkeit der Deformationselemente, die nicht in den Rasteingriff gelangen bzw. aus dem Rasteingriff gelangen.

Gemäß einer Weiterbildung der Deformationsstruktur können die Deformationselemente baugleich ausgebildet sein.

Gemäß einer bevorzugten Weiterbildung reagiert in dem Anwendungsfall der Deformationsstruktur als Fußgängerschutz im Kraftfahrzeug die Reihe Deformationselemente unterhalb eines Kollisionsgeschwindigkeitsschwellwerts durch die Verrastung angrenzender Deformationselemente steifer und bei Erreichen des Kollisionsgeschwindigkeitsschwellwerts durch das Lösen oder Fehlen der Verrastung weicher.

Damit kann die Struktur des Vorderwagens bzw. des Hinterwagens des Kraftfahrzeugs bei einer verhältnismäßig niedrigen Geschwindigkeit hinreichend steif ausgebildet werden, so dass keine strukturelle Beschädigung beispielsweise der Stoßfängerverkleidung oder dergleichen durch zu starke Verformung erfolgt. Hierdurch können Reparaturkosten bei Kollisionen bei sehr niedriger Geschwindigkeit wie beispielsweise bei sogenannten Parkremplern minimiert werden und lediglich auf das Ausbessern von beispielsweise Lackschäden begrenzt werden.

Oberhalb des Kollisionsgeschwindigkeitsschwellwerts, der für einen Fußgängerschutz relevant ist, erfolgt keine Verrastung angrenzender Deformationselemente und die Reihe Deformationselemente kann mit einer verhältnismäßig geringen Kraft zum Schutz von Fußgängern in seiner Länge verändert werden, d.h. durch Relativverschiebung der angrenzenden Deformationselemente zueinander zusammengeschoben werden.

Je nach Kollisionslast und damit der Geschwindigkeit bei der Kollision kann die Deformationsstruktur demnach vollständig steif reagieren und die Kollisionslast auf die dahinter liegende Crashstruktur des Fahrzeugs übertragen, oder ein Lastschwellwert der verrasteten Deformationselemente ist überschritten und die Reihe Deformationselemente versagt durch Sprödbruch oder plastische Verformung und kann damit Kollisionsenergie zum Schutz anderer Bauteile und der Fahrzeuginsassen absorbieren.

In dem Anwendungsfall der Deformationsstruktur als Fußgängerschutz in dem Kraftfahrzeug kann eine Reihe Deformationselemente eine Länge von 50 bis 150 mm aufweisen. Bevorzugt kann die Reihe Deformationselemente eine Länge zwischen 70 und 110 mm aufweisen. In dem zweiten Lastfall kann dabei die Reihe Deformationselemente bevorzugt auf einem niedrigen Kraftniveau um 60 bis 110 mm deformierbar sein.

Vorstehend aufgeführte Weiterbildungen der Erfindung können soweit möglich und sinnvoll beliebig miteinander kombiniert werden.

Es folgt eine Kurzbeschreibung der Figuren.
- Fig. 1: zeigt schematisch in einer Seitenansicht einen Abschnitt einer Deformationsstruktur zum Fußgängerschutz für ein Kraftfahrzeug gemäß einem Ausführungsbeispiel der vorliegenden Erfindung.
- Fig. 2: zeigt schematisch in einer Perspektivansicht die Deformationsstruktur gemäß dem Ausführungsbeispiel der vorliegenden Erfindung.
- Figuren 3a bis 3g: zeigen schematisch in einer Seitenansicht die Deformationsstruktur gemäß dem Ausführungsbeispiel der vorliegenden Erfindung in einem Kollisionslastfall mit einer höheren Geschwindigkeit.
- Figuren 4a bis 4g: zeigen schematisch in einer Seitenansicht die Deformationsstruktur gemäß dem Ausführungsbeispiel der vorliegenden Erfindung in einem Kollisionslastfall mit einer niedrigeren Geschwindigkeit.

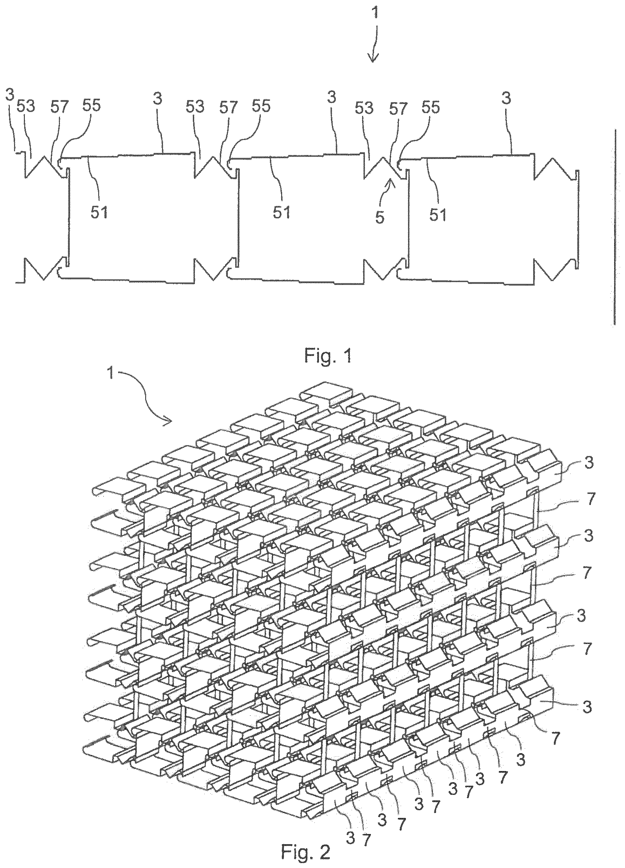

Im Folgenden sind Ausführungsbeispiele der vorliegenden Erfindung unter Bezugnahme auf Figuren 1, 2, 3a bis 3g und 4a bis 4g beschrieben.

Figur 1 zeigt einen Grundabschnitt einer Deformationsstruktur 1 gemäß einem Ausführungsbeispiel der vorliegenden Erfindung. Die Deformationsstruktur 1 ist gemäß dem Ausführungsbeispiel an einem Frontend eines Kraftfahrzeugvorderwagens, insbesondere einem Kraftfahrzeugbug, vor einem nicht gezeigten Stoßfängerquerträger an Stelle eines bekannten Fußgängschutzschaums montiert. Insbesondere ist die Deformationsstruktur 1 in einem Raum zwischen einer Fahrzeugaußenhaut, das heißt einer Stoßfängerverkleidung, und dem Stoßfängerquerträger angeordnet.

Wie in Figur 1 gezeigt ist, hat die Deformationsstruktur 1 eine Reihe hintereinander angeordneter Deformationselemente 3. Die Deformationselemente 3 sind über einen Kopplungsmechanismus 5 miteinander gekoppelt. Jedes Deformationselement 3 hat einen im Wesentlichen u-förmigen Aufbau bestehend aus einem Grundelement an dem zwei blattförmige elastisch nach außen verformbare Schenkel 51 angeordnet sind. Die zwei gegenüber liegenden Schenkel 51 erstrecken sich im Wesentlichen in Fahrzeuglängsrichtung, wobei die nachfolgende Erläuterung sich lediglich auf einen Schenkel 51 bezieht, wobei der andere Schenkel 51 symmetrisch hierzu aufgebaut ist. Ein vorderes Ende des Schenkels 51 grenzt an das Grundelement des angrenzenden Deformationselements 3 an und hat eine Rastnase 55 die gegebenenfalls mit dem angrenzenden Grundelement in Eingriff ist. Das Grundelement hat eine schräge Kontaktfläche 57, hinter der eine Rastvertiefung 53 ausgebildet ist. Die Kontaktfläche 57 hat eine Steigung in Fahrzeuglängsrichtung.

In Figur 2 ist die Deformationsstruktur 1 in einer perspektivischen Ansicht gezeigt. Die Deformationsstruktur 1 hat mehrere Reihen Deformationselemente 3 nebeneinander, d.h. in y-Richtung des Kraftfahrzeugs, und übereinander, d.h. in z-Richtung des Kraftfahrzeugs, angeordnet. Dabei sind nebeneinander und übereinander angeordnete Deformationselemente 3 über dünne Stege 7 miteinander verbunden. Durch die Stege 7 sind die Reihen Deformationselemente 3 miteinander verbunden und bildet die Deformationsstruktur 1 eine integrale Baueinheit. Die Zahl der Reihen Deformationselemente 3 und die Zahl der Deformationselemente 3 in einer Reihe kann je nach Bedarf gewählt werden.

Die Deformationsstruktur 1 ist bevorzugt aus einem Kunststoffmaterial hergestellt, wodurch die Deformationsstruktur 1 kostengünstig hergestellt werden kann und hinreichend leicht ausgebildet werden kann. Insbesondere kann die Deformationsstruktur 1 mittels eines Rapid Manufacturing Verfahrens in einem Stück hergestellt werden. Alternativ könnten die Deformationselemente 3 auch getrennt hergestellt werden und mittels eines geeigneten, automatisierten Bestückungsverfahrens miteinander kombiniert und verbunden werden.

Nachstehend ist eine Funktion der Deformationsstruktur 1 unter Bezugnahme auf Figur 1, Figur 2 sowie Figuren 3a bis 3g und Figuren 4a bis 4g beschrieben.

In dem Fall, in dem in Längsrichtung der Reihe Deformationselemente 3 durch eine Kollision eine Last aufgebracht wird - in Figur 1 von der rechten Seite - wird das vordere Ende des Schenkels 51 mit der Rastnase 55 gegen die schräge Kontaktfläche 57 gedrückt. Sobald eine Reibkraft zwischen der Rastnase 55 und der Kontaktflläche 57 überwunden ist, gleitet dann die Rastnase 55 entlang der Konkaktfläche 57, wodurch der Schenkel 51 elastisch nach außen verformt wird, während das Deformationselement 3 durch die Kollisionslast in Richtung des angrenzenden Deformationselements 3 verschoben wird. Hierdurch wird der Schenkel 51 sukzessive vorgespannt bis er ans Ende der Kontaktfläche 57 gelangt.

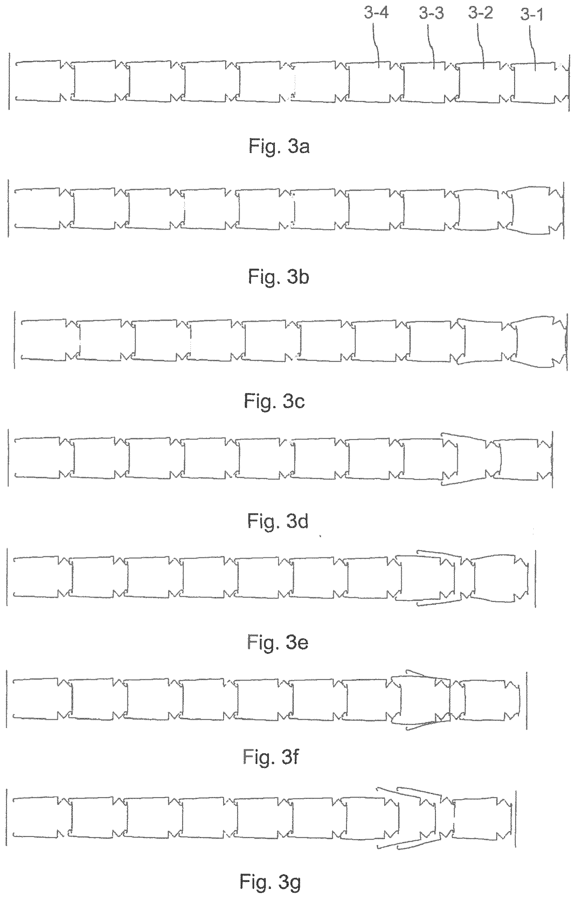

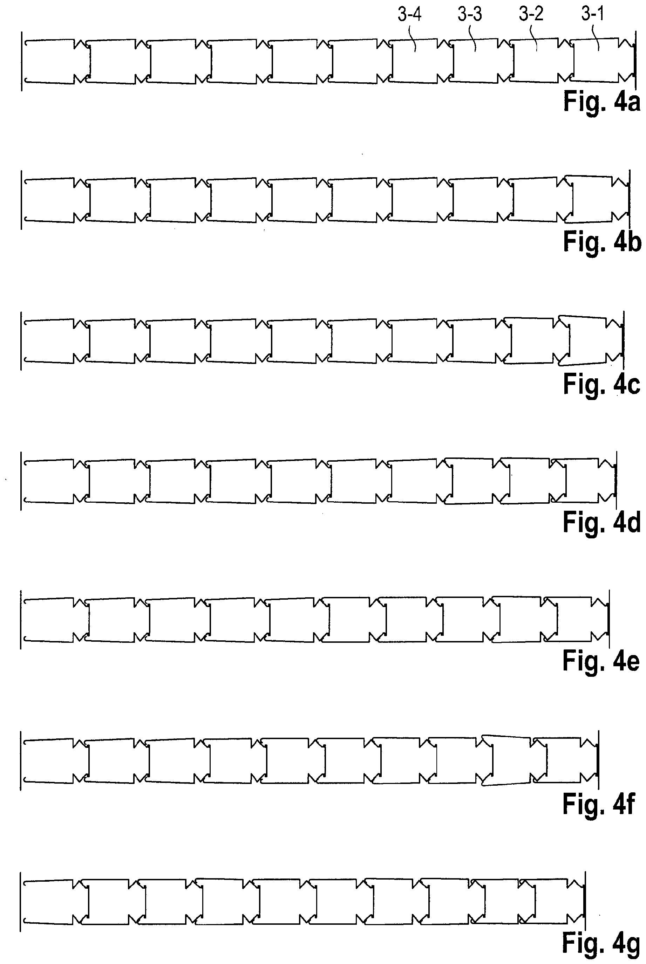

Der weitere Verlauf der Verschiebung der angrenzenden Deformationselemente 3 zueinander hängt dabei von dem jeweiligen Kollisionslastfall ab. In Figuren 3a bis 3g ist hierbei der Fußgängerschutzlastfall gleich oder oberhalb einer vorgegebenen Kollisionsgeschwindigkeit von 20 km/h gezeigt. In Figuren 4a bis 4g ist hierbei der Niedriggeschwindigkeitslastfall unterhalb der vorgegebenen Kollisionsgeschwindigkeit von 20 km/h gezeigt. Die vorgegebene Kollisionsgeschwindigkeit ist hierbei lediglich beispielhaft genannt und kann auch auch einen anderen Wert aufweisen.

Zunächst ist unter Bezugnahme auf Figuren 3a bis 3g eine Funktion der Deformationsstruktur 1 bei einer Kollision des Kraftfahrzeugs mit der Kollisionsgeschwindigkeit von ungefähr 20 km/h und mehr beschrieben.

In Figur 3a ist der Zustand vor Beginn der Verformung der Deformationsstruktur 1 gezeigt. Figur 3b zeigt schließlich eine beginnende elastische Verformung der Schenkel 51 des ersten Deformationselements 3-1 und des zweiten Deformationselements 3-2. In Figur 3c ist gezeigt, wie die Rastnasen 55 der Schenkel 51 des zweiten Deformationselements 3-2 beginnen an den schrägen Kontaktflächen 57 des dritten Deformationselements 3-3 entlang zu gleiten und dabei elastisch vorgespannt werden. In Figur 3d ist gezeigt, wie die Rastnasen 55 der Schenkel 51 des zweiten Deformationselements 3-2 durch eine schnelle Verschiebegeschwindigkeit und deren Massenträgheit über die Vertiefungen 53 des dritten Deformationselements 3-3 hinweggleiten ohne in die Vertiefungen 53 einzudringen bzw. mit diesen einzugreifen. In Figur 3e ist gezeigt, wie das zweite Deformationselement 3-2 infolgedessen weiter in Richtung des dritten Deformationselements 3-3 geschoben wird, wobei die Schenkel 51 gegebenenfalls entsprechend weiter elastisch verformt werden, wobei diese elastische Verformung jedoch auf einem vergleichsweise niedrigen Kraftniveau erfolgt. In Figur 3f ist schließlich gezeigt, wie das zweite Deformationselement 3-2 vollständig gegen das dritte Deformationselement 3-3 geschoben wurde und die beiden Grundelemente im Wesentlichen aneinander angrenzen, wobei die Kollisionslast verstärkt auf das dritte Deformationselement 3-3 wirkt, dessen Rastnasen 55 der Schenkel 51 schließlich entlang der Kontaktflächen 57 des vierten Deformationselements 3-4 gleiten und damit die Schenkel 51 des dritten Deformationselements 3-3 elastisch vorgespannt werden. In Figur 3g ist dann gezeigt wie auch die Rastnasen 55 der Schenkel 51 des dritten Deformationselements 3-3 nicht mit den Vertiefungen 53 des vierten Deformationselements 3-4 eingreifen und das dritte Deformationselement 3-3 auf einem niedrigen Kraftniveau weiter in Richtung des vierten Deformationselements 3-4 verschoben werden. Je nach Verlauf der Kollisionslast können somit alle Deformationselemente 3 nacheinander zu Gunsten eines Fußgängerschutzes auf einem niedrigen Kraftniveau ineinandergeschoben werden.

Ab der Kollisonsgeschwindigkeit von ungefähr 20 km/h ist es wichtig, dass das Frontend des Kraffahrzeugvorderwagens, und insbesondere die Stoßfängerverkleidung in Verbindung mit der Deformationsstruktur 1 hinreichend weich bei einem geringen Verformungskraftniveau zum Schutz eines Fußgängers reagiert. Ist der Kollisionsgegner ein Fußgänger wirkt demnach bei einer Geschwindigkeit von ungefähr 20 km/h und mehr vorteilhaft eine verhältnismäßig geringe Kraft auf den Fußgänger.

Dies ist erfindungsgemäß durch den beschriebenen Kopplungsmechanismus 5 verwirklicht, der auf Grundlage einer Massenträgheit der Schenkel 51 in Zusammenwirkung mit deren elastischer Vorspannung im Verlauf der Kollision funktioniert.

Im Folgenden ist unter Bezugnahme auf Figuren 4a bis 4g eine Funktion der Deformationsstruktur 1 bei einer Kollision des Kraftfahrzeugs mit einer Kollisionsgeschwindigkeit von weniger als ungefähr 20 km/h beschrieben.

In Figur 4a ist der Zustand vor Beginn der Verformung der Deformationsstruktur 1 gezeigt. Figur 4b zeigt schließlich eine beginnende elastische Verformung der Schenkel 51 des ersten Deformationselements 3-1 und ein Gleiten der Rastnasen 55 an den Kontaktflächen 57 des zweiten Deformationselements 3-2. In Figur 4c ist gezeigt, wie die Rastnasen 55 des ersten Deformationselements 3-1 eine maximale Vorspannung erreicht haben und am Ende der Kontaktflächen 57 angelangt sind. In Figur 4d ist gezeigt, wie die Rastnasen 55 des ersten Deformationselements 3-1 durch die langsame Verschiebegeschwindigkeit und seine elastische Vorspannung in die Vertiefungen 53 einrastet. Hierdurch ist eine weitere Verschiebung des Deformationselements 3-1 gegenüber dem Deformationselement 3-2 formschlüssig blockiert. In Figur 4e ist gezeigt, wie die Rastnasen 55 des zweiten Deformationselements 3-2 entlang der Kontaktflächen 57 des dritten Deformationselements 3-3 gleiten und damit die Schenkel 51 des zweiten Deformationselements 3-2 elastisch verformt werden. In Figur 4f ist gezeigt, wie eine Vorspannung der Schenkel 51 des zweiten Deformationselements 3-2 ein Maximum erreicht und die Rastnasen 55 am Ende der Kontaktflächen 57 angelangt sind und die Rastnasen 55 der Schenkels 51 des dritten Deformationselements 3-3 bereits entlang der Kontaktflächen 57 des vierten Deformationselements 3-4 gleiten. In Figur 4g ist gezeigt, wie auch die Rastnasen 55 der Schenkel 51 des zweiten Deformationselements 3-2 in die Vertiefungen 53 des dritten Deformationselements 3-3 eingreifen, wobei damit eine weitere Verschiebung des zweiten Deformationselements 3-2 gegenüber dem dritten Deformationselement 3-3 formschlüssig blockiert ist, und die Rastnasen 55 der Schenkel 51 des dritten Deformationselement 3-3 bereits am Ende der Kontaktflächen 57 des vierten Deformationselements 3-4 angelangt sind und eine maximale Vorspannung erreicht haben. Je nach Verlauf der Kollisionslast können somit alle Deformationselemente 3 formschlüssig miteinander verrasten, so dass die Deformationsstruktur 1 durch die langsame Kollisionsgeschwindigkeit des Kraftfahrzeugs und die hierdurch bedingte langsame Verschiebegeschwindigkeit der Deformationselemente 3 relativ zueinander insgesamt steifer wirkt als bei der schnelleren Kollisionsgeschwindigkeit bei der eine formschlüssige Verrastung der Deformationselemente 3 nicht erfolgt, wirkt.

Im Fall der langsamen Kollisionsgeschwindigkeit überträgt damit die Deformationsstruktur 1 je nach Kollisionslastniveau die Kollisionslast direkt auf eine dahinter liegende Struktur des Kraftfahrzeugs oder die einzelnen Deformationselemente 3 der Deformationsstruktur 1 versagen spröde durch Brechen oder/und versagen durch plastische Verformung auf einem höheren Lastniveau als bei der schnelleren Kollisionsgeschwindigkeit.

Insbesondere kann die Deformationsstruktur 1 derart ausgelegt sein, dass sie bei Kollisionsgeschwindigkeiten von beispielsweise weniger als 4 km/h eine Kollisionslast ohne Versagen der Deformationselemente 3 auf die Crashstruktur übertragen kann. Dies ist vorteilhaft, wenn bei sogenannten Parkremplern oder dergleichen kein reparaturbedürftiger Schaden am Kraftfahrzeug entstehen soll, und hat einen Einfluss auf beispielsweise eine Versicherungseinstufung des Kraftfahrzeugs.

Bei einer größeren Kollisionsgeschwindigkeit, die jedoch für einen Fußgängerschutz noch nicht relevant ist, wie beispielsweise einer Geschwindigkeit zwischen 4 km/h und 20 km/h, kann die Deformationsstruktur 1 auf einem bestimmten Lastniveau plastisch verformt werden und/oder spröde versagen, so dass die Deformationsstruktur 1 zum Abbau von Kollisionsenergie beiträgt, ohne dass beispielsweise hinter dem Stoßfängerquerträger vorhandene Bauelemente, wie beispielsweise ein Kühler, beschädigt werden. In diesem Fall muss dann lediglich die vergleichsweise kostengünstige Deformationsstruktur 1 und gegebenenfalls die Stoßfängerverkleidung ausgetauscht werden.

Insgesamt kann durch die erfindungsgemäße Deformationsstuktur 1 somit ein Zielkonflikt gelöst werden, der zum Einen bei sehr niedrigen Kollisionsgeschwindigkeiten, die für den Fußgängerschutz nicht relevant sind, eine hinreichend große Steifigkeit des Deformationsstruktur 1 bzw. ein hinreichend großes Verformungskraftniveau der Deformationsstruktur 1 ermöglicht und bei einer etwas höheren Kollisionsgeschwindigkeit, die für den Fußgängerschutz relevant ist, einen hinreichenden Fußgängerschutz durch ein niedriges Verformungskraftniveau gewährleistet.

## Patentansprüche

1. Deformationsstruktur (1), die beispielsweise zum Fußgängerschutz für ein Kraftfahrzeug zur Anordnung zwischen einer Stoßfängerverkleidung und einem Stoßfängerquerträger angepasst ist, mit einer Reihe in eine Deformationsrichtung hintereinander angeordneter Deformationselemente (3) **dadurch gekennzeichnet, dass** jeweils zwei aneinander angrenzende Deformationselemente (3) mittels eines Kopplungsmechanismus (5) derart miteinander gekoppelt sind, dass in einem ersten Lastfall zwei angrenzende Deformationselemente miteinander in einen Rasteingriff gelangen oder sich einem Rasteingriff befinden, so dass eine Relatiwerschiebung der angrenzenden Deformationselemente zueinander in die Deformationsrichtung unterbunden oder zumindest erschwert ist und eine Verformung der Deformationsstruktur (1) auf einem hohen Kraftniveau erfolgt, und in einem zweiten Lastfall zwei angrenzende Deformationselemente (3) nicht in den Rasteingriff gelangen oder außer Rasteingriff gelangen, so dass eine Relativverschiebung der angrenzenden Deformationselemente (3) in die Deformationsrichtung ermöglicht oder zumindest erleichtert ist und eine Verformung der Deformationsstruktur (1) auf einem niedrigen Kraftniveau erfolgt.

2. Deformationsstruktur nach Patentanspruch 1, wobei jedes Deformationselement (3) als Bestandteil des Kopplungsmechanismus (5) ein elastisch verformbares Element (51) aufweist, das mit dem angrenzenden Deformationselement (3) eingreift und in dem ersten Lastfall sich in dem Rasteingriff mit dem angrenzenden Deformationselement (3) befindet oder in den Rasteingriff mit dem angrenzenden Deformationselement (3) gelangt, und in dem zweiten Lastfall nicht in den Rasteingriff mit dem angrenzenden Deformationselement (3) gelangt oder außer Rasteingriff von dem angrenzenden Deformationselement (3) gelangt.

3. Deformationsstruktur nach Patentanspruch 2, wobei der Kopplungsmechanismus (5) derart ausgebildet ist, dass das elastisch verformbare Element (51) elastisch vorgespannt ist oder durch eine Relativverschiebung zweier angrenzender Deformationselemente elastisch vorspannbar ist, und
wobei der Kopplungsmechanismus (5) insbesondere derart ausgebildet ist, dass unter Ausnutzung einer Massenträgheit des vorgespannten elastisch verformbaren Elements (51) bei einer ersten, beispielsweise geringeren, Verschiebegeschwindigkeit das elastisch verformbare Element (51) des einen Deformationselements (3) mit einer Vertiefung (53) oder einem Vorsprung des anderen Deformationselements (3) in den Rasteingriff gelangt und das elastisch verformbare Element (3) bei einer zweiten, beispielsweise höheren, Verschiebegeschwindigkeit nicht in den Rasteingriff mit der Vertiefung (53) oder dem Vorsprung gelangt.

4. Deformationsstruktur nach einem der Patentansprüche 2 oder 3, wobei das elastisch verformbare Element (51) eines Deformationselements (3) derart zusammenwirkend mit einem angrenzenden Deformationselement (3) ausgebildet ist, dass mit einer Verschiebung der angrenzenden Deformationselemente (3) zueinander, das elastisch verformbare Element (51), beispielsweise über eine schräge Kontaktfläche (57) des angrenzenden Deformationselements (3), elastisch verformbar und vorspannbar ist.

5. Deformationsstruktur nach einem der Patentansprüche 2 bis 4, wobei das elastisch verformbare Element (51) ein insbesondere blattförmiger Schenkel ist, dessen vorderes Ende eine Rastnase (55) oder eine Rastvertiefung für einen Rasteingriff mit dem angrenzenden Deformationselement (3) aufweist.

6. Deformationsstruktur nach Patentanspruch 5, wobei jedes Deformationselement (3) im Wesentlichen u-förmig mit einem Grundelement und zwei gegenüberliegenden Schenkeln (51), die jeder das elastische Element bilden, ausgebildet ist, wobei Enden (55) der Schenkel (51) mit dem Grundelement eines weiteren Deformationselements (3) gekoppelt sind.

7. Deformationsstruktur nach einem der Patentansprüche 1 bis 6, wobei jedes Deformationselement (3) einstückig ausgebildet ist,
und wobei insbesondere die Deformationselemente (3) aus einem Kunststoffmaterial ausgebildet sind.

8. Deformationsstruktur nach einem der Patentansprüche 1 bis 7, wobei ferner eine Vielzahl von Reihen Deformationselemente (3) nebeneinander angeordnet ist.

9. Deformationsstruktur nach Patentanspruch 8, wobei unmittelbar nebeneinander angeordnete Deformationselemente (3) durch einen Steg miteinander verbunden sind, der insbesondere derart ausgebildet ist, dass er im Kollisionslastfall spröde und/oder plastisch versagt.

10. Deformationsstruktur nach einem der Patentansprüche 1 bis 9, wobei die Deformationselemente (3) angepasst ist, in einem Zustand des Rasteingriffs Energie durch plastische Verformung und/oder sprödes Versagen des Deformationselements über eine vorgegebene Deformationsstrecke zu absorbieren.

11. Deformationsstruktur nach Patentanspruch 10, wobei eine Energieabsorptionsfähigkeit der Deformationselemente (10), die sich in einem Rasteingriff befinden bzw. im Rasteingriff bleiben, größer als eine Energieabsorptionsfähigkeit der Deformationselemente (3) ist, die nicht in den Rasteingriff gelangen bzw. aus dem Rasteingriff gelangen.

12. Deformationsstruktur nach einem der Patentansprüche 1 bis 11, wobei die Deformationselemente (3) baugleich ausgebildet sind.

## Claims

1. A deformation structure (1), which is adapted for example for pedestrian protection for a motor vehicle for arrangement between a bumper cover and a bumper crossbeam, comprising a series of deformation elements (3) arranged one behind the other in a deformation direction, **characterised in that** every two adjacent deformation elements (3) are coupled together by means of a coupling mechanism (5) in such a way that, in a first load case, two adjacent deformation elements enter into a latching engagement with one another or are positioned in a latching engagement, such that a relative displacement of the adjacent deformation elements with respect to one another in the deformation direction is prevented, or at least made more difficult, and a deforming of the deformation structure (1) occurs at a high level of force, and, in a second load case, two adjacent deformation elements (3) do not enter into the latching engagement or leave the latching engagement, such that a relative displacement of the adjacent deformation elements (3) in the deformation direction is enabled, or at least made easier, and a deforming of the deformation structure (1) occurs at a low level of force.

2. A deformation structure according to Claim 1, every deformation element (3) as a component of the coupling mechanism (5) having an elastically deformable element (51) which engages with the adjacent deformation element (3) and, in the first load case, is positioned in the latching engagement with the adjacent deformation element (3) or enters into the latching engagement with the adjacent deformation element (3), and, in the second load case, does not enter into the latching engagement with the adjacent deformation element (3) or leave the latching engagement with the adjacent deformation element (3).

3. A deformation structure according to claim 2, the coupling mechanism (5) being formed in such a way that the elastically deformable element (51) is elastically preloaded or is elastically preloadable through a relative displacement of two adjacent deformation elements, and the coupling mechanism (5) being formed in particular in such a way that, when using mass inertia of the preloaded elastically deformable element (51) at an initial, such as a lower, displacement speed, the elastically deformable element (51) of the one deformation element (3) enters into the latching engagement with a recess (53) or a protrusion of the other deformation element (3) and at a second, such as a higher, displacement speed, the elastically deformable element (3) does not enter into the latching engagement with the recess (53) or the protrusion.

4. A deformation structure according to either of Claims 2 or 3, the elastically deformable element (51) of a deformation element (3) being designed to cooperate with an adjacent deformation element (3) in such a way that, with a relative displacement of the adjacent deformation elements (3), the elastically deformable element (51) is elastically deformable and preloadable, for example via a sloped contact surface (57) of the adjacent deformation element (3).

5. A deformation structure according to one of Claims 2 to 4, the elastically deformable element (51) being an in particular leaf-shaped leg whose front end has a latch (55) or a latch recess for a latching engagement with the adjacent deformation element (3).

6. A deformation structure according to Claim 5, every deformation element (3) being designed as essentially U-shaped with a base element and two opposing legs (51) which each form the elastic element, ends (55) of the legs (51) being coupled with the base element of a further deformation element (3).

7. A deformation structure according to one of Claims 1 to 6, every deformation element (3) being formed as one piece and the deformation elements (3) in particular being formed from a plastic material.

8. A deformation structure according to one of Claims 1 to 7, a multitude of rows of deformation elements (3) being further arranged adjacent to one another.

9. A deformation structure according to Claim 8, immediately adjacent deformation elements (3) being connected to one another by a bridge which is formed in particular in such a way that, in the event of a collision load case, it fails in a brittle or plastic manner.

10. A deformation structure according to one of Claims 1 to 9, the deformation element (3) being adjusted in such a way that, in a state of the latching engagement, it absorbs energy through plastic deformation and/or brittle fracture of the deformation element over a specified deformation distance.

11. A deformation structure according to Claim 10, an energy absorption ability of the deformation elements (10) which enter into a latching engagement or remain in a latching engagement being larger than an energy absorption ability of the deformation elements (3) that do not enter into the latching engagement or leave the latching engagement.

12. A deformation structure according to one of Claims 1 to 11, the deformation elements (3) being formed in such a way that they are structurally identical.

## Revendications

1. Structure de déformation (1) par exemple pour la protection de piéton dans un véhicule, destinée à être installée entre un habillage de pare-chocs et une traverse de pare-chocs, comprenant un ensemble d'éléments de déformation (3) installés les uns derrières les autres dans une direction de déformation,
**caractérisée en ce que**
deux éléments de déformation (3) respectivement voisins sont couplés au moyen d'un mécanisme de couplage (5) de sorte que, dans un premier cas de charge deux éléments de déformation voisins viennent en prise par encliquetage ou soient en prise par encliquetage, pour qu'un décalage relatif de ces éléments de déformation voisins dans la direction de déformation soit empêchée, ou pour le moins rendu plus difficile, et qu'une déformation de la structure de déformation (1) se produise pour un niveau de contrainte élevé, et dans un second cas de charge, deux éléments de déformation (3) voisins ne viennent pas en prise par encliquetage, ou ne soient pas en prise par encliquetage, pour qu'un décalage relatif de ces éléments de déformation voisins (3) dans la direction de déformation soit possible, ou pour le moins facilité, et qu'une déformation de la structure de déformation (1) se produise pour un niveau de contrainte faible.

2. Structure de déformation conforme à la revendication 1,
dans laquelle chaque élément de déformation (3) comporte, en tant que composant du mécanisme de couplage (5) un élément (51) élastiquement déformable qui vient en prise avec l'élément de déformation (3) voisin, et dans le premier cas de charge se trouve en prise par encliquetage avec l'élément de déformation (3) voisin, ou vienne en prise par encliquetage avec l'élément de déformation (3) voisin, et dans le second cas de charge, ne vienne pas en prise par encliquetage avec l'élément de déformation (3) voisin ou soit hors de prise avec l'élément de déformation (3) voisin.

3. Structure de déformation conforme à la revendication 2,
dans laquelle le mécanisme de couplage (5) est réalisé de sorte que l'élément élastiquement déformable (51) soit élastiquement précontraint, ou soit élastiquement précontraint par un décalage relatif de deux éléments de déformation voisins, et
le mécanisme de couplage (5) est en particulier réalisé de sorte qu'en utilisant l'inertie de l'élément élastiquement déformable précontraint (51), dans le cas d'une première vitesse de décalage par exemple plus faible, l'élément élastiquement déformable (51) de l'un des éléments de déformation (3) vienne en prise par encliquetage avec un renfoncement (53) ou une saillie de l'autre élément de déformation (3), et que, dans le cas d'une seconde vitesse de décalage par exemple plus élevée, l'élément élastiquement déformable (3) ne vienne pas en prise par encliquetage avec le renfoncement (53) ou la saillie.

4. Structure de déformation conforme à l'une des revendications 2 et 3, dans laquelle l'élément élastiquement déformable (51) d'un élément de déformation (3) est réalisé pour coopérer avec un élément de déformation (3) voisin de sorte que, avec un décalage des éléments de déformation (3) voisins l'un par rapport à l'autre, l'élément élastiquement déformable (51) puisse être élastiquement déformé et précontraint par exemple sur une surface de contact oblique (57) de l'élément de déformation (3) voisin.

5. Structure de déformation conforme à l'une des revendications 2 à 4, dans laquelle l'élément élastiquement déformable (51) est une branche en particulier en forme de feuille dont l'extrémité avant comporte un bec d'encliquetage (55) ou un renfoncement d'encliquetage pour permettre une mise en prise par encliquetage avec l'élément de déformation (3) voisin.

6. Structure de déformation conforme à la revendication 5,
dans laquelle chaque élément de déformation (3) est essentiellement en forme de u avec un élément de base et deux branches (51) opposées qui forment chacune l'élément élastique, les extrémités (55) des branches (51) étant couplées à l'élément de base d'un autre élément de déformation (3).

7. Structure de déformation conforme à l'une des revendications 1 à 6, dans laquelle chaque élément de déformation (3) est réalisé en une seule pièce et, en particulier les éléments de déformation (3) sont réalisés en un matériau synthétique.

8. Structure de déformation conforme à l'une des revendications 1 à 7, dans laquelle plusieurs rangées d'éléments de déformation (3) sont en outre installées côte à côte.

9. Structure de déformation conforme à la revendication 8,
dans laquelle des éléments de déformation (3) situés directement côte à côte sont reliés par une barrette qui est en particulier réalisée pour se rompre par fragilité et/ou se déformer plastiquement en cas de collision.

10. Structure de déformation conforme à l'une des revendications 1 à 9, dans laquelle les éléments de déformation (3) sont adaptés pour pouvoir absorber de l'énergie, à l'état de la mise en prise par encliquetage, par déformation plastique et/ou par rupture par fragilité de l'élément de déformation sur un trajet de déformation prédéfini.

11. Structure de déformation conforme à la revendication 10,
dans laquelle l'aptitude d'absorption d'énergie des éléments de déformation (10) qui sont en prise par encliquetage ou viennent en prise par encliquetage est supérieure à l'aptitude d'absorption d'énergie des éléments de déformation (3) qui ne viennent pas en prise par encliquetage ou ne sont pas en prise par encliquetage.

12. Structure de déformation conforme à l'une des revendications 1 à 11,
dans laquelle les éléments de déformation (3) ont le même configuration.
